# EUROPEAN PATENT SPECIFICATION

(11) **EP 3 370 956 B1**
(45) Date of publication and mention of the grant of the patent: **17.01.2024**
(21) Application number: 16862770.1
(22) Date of filing: 01.11.2016
(51) Int. Cl.: B32B 27/04, D04H 1/48, B32B 5/08, B29C 70/38, B29C 70/86, B29C 70/16, B29L 31/00, B29C 70/34

(54) **THERMOPLASTIC COMPOSITE IN-SITU MELT PROCESSING METHOD FOR COMPOSITE OVERWRAPPED TOOLS**
VERARBEITUNGSVERFAHREN MIT IN-SITU-SCHMELZEN VON THERMOPLASTISCHEM VERBUNDSTOFF FÜR MIT VERBUNDSTOFF UMMANTELTE WERKZEUGE
PROCÉDÉ DE TRAITEMENT PAR FUSION IN-SITU DE COMPOSITE THERMOPLASTIQUE POUR OUTILS ENVELOPPÉS DE COMPOSITE

(30) Priority: 02.11.2015 US 201562249467 P
(43) Date of publication of application: 12.09.2018
(73) Proprietor: Teijin Carbon America, Inc., Rockwood, Tennessee 37854 (US)
(72) Inventor: SHPIK, Peter, Knoxville, Tennessee 37934 (US)
(74) Representative: Sawodny, Michael-Wolfgang
(86) International application number: PCT/US2016/059814
(87) International publication number: WO 2017/079103

(56) References cited:
- EP-B1- 0 415 207
- US-A1- 2008 020 193
- US-A1- 2011 309 074
- US-A1- 2014 110 633
- US-A1- 2014 110 633
- US-A1- 2015 102 037
- US-A1- 2015 292 677
- US-B2- 6 893 604
- US-B2- 8 123 888
- US-H- H1 261

## Description

### CROSS-REFERENCE TO RELATED APPLICATIONS

This application claims the benefit of U.S. Provisional Patent Application Number 62/249,467, filed on November 2, 2015.

### STATEMENT REGARDING FEDERALLY SPONSORED RESEARCH OR DEVELOPMENT

Not Applicable

### BACKGROUND OF THE INVENTION

### 1. Field of Invention

The invention relates to a method of overwrapping a fiber resin composite over a tool. More particularly, it relates to an in-situ melt process of combining a fiber and a resin and applying the molten fiber resin complex to a heated tool such as a pressure vessel in one continuous operation.

### 2. Description of the Related Art

In the field of carbon fiber and resin composites, due to the higher strength to weight ratio of carbon fiber over steel, numerous tools and structural components, such as concrete pilings, aircraft wings and fuselages, automotive applications, and sporting goods are increasingly substituting carbon fiber and resin composites for steel. Composite Overwrapped Pressure Vessels, ("COPV"), are among the structures that make use of carbon fiber composite technology. And, it is known that there are a number of COPV designs in the market today. In this regard, Type II pressure vessels utilize hoop wraps of fiber over a metallic, usually steel, liner. Type III pressure vessels utilize both hoops and helical wraps of fiber over a metallic liner, usually aluminum, liner. Type IV pressure vessels utilize hoops and helical wraps over a plastic liner. And, Type V pressure vessels utilize hoop and helical fiber wraps over a liner-less tool that may incorporate a barrier film to prevent gas permeation. While the present invention has utility within these types of pressure vessels, as described herein, it also has utility in other types of tools that utilize a composite overwrap. The majority of these designs use a traditional wet winding process with carbon fiber and thermosetting resin. And, it is well known that the current materials and processes used to manufacture tanks today are costly and laborious.

The world-wide demand for fiber, including carbon fiber, for COPVs is growing. Fiber is used for tanks for CNG vehicles, pipelines, storage, and transportation for gases, including without limitation, CNG, Hydrogen, Nitrogen and other gases. Those skilled in the art expect this demand to continue to grow, driven mostly by the class 8 truck market, especially in the event that oil prices begin to rise again and the refueling infrastructure expands and matures.

As stated above, the main cost drivers for COPVs are material and manufacturing time. The current COPV manufacturing process consists of the following steps and results in a long process cycle for tank manufacturing:
- Select one of several known methods of forming fiber/resin complex;
- Wind fiber/resin complex onto the pressure vessel body;
- Rotate pressure vessel until B-stage is achieved;
- Cure cylinder at elevated temperature in oven; and
- Clean-up cylinder and package.

If COPVs are to be widely adopted into the high volume markets, such as the transportation market, a higher speed, lower cost, manufacturing process (elimination of equipment and process steps) is necessary.

Carbon fiber is typically delivered as a single individual fiber filaments bundled up into a tow. Moreover, a tow may comprise as few as a thousand or as many as twenty-four thousand, or more, individual micron size carbon filaments. Depending upon the bandwidth of the tow as the fiber is being wrapped around a workpiece, the tow may be several hundred fibers thick. As used herein, "bandwidth" refers to the total spread width of a fiber tow. And, it is known that it is desirable and critical to maintain the individual filaments within a tow at a consistent tension as the tow is wound around a workpiece such as a pressure vessel. In this regard, it is known that if each individual filament is fixed in relation to each other, as with a rigid construction (plastic tape and towpreg) is wound around a radius, it is difficult to maintain consistent individual filament tension. This does not allow the individual filaments to slide relative to one another causing a phenomenon of catenary, creases, and wrinkles, which overall decreases the performance of the structure. This is because every individual filament does not contribute to the overall composite performance. That is, some individual filaments are subjected to the structural load while others are not being utilized. What happens is that some carbon fiber filaments fracture before the ultimate load is realized. Various known wet winding processes alleviate this problem to some extent because the individual filaments are allowed to slide relative to each other. Known wet winding processes suffer from other disadvantages including the necessity of using a low viscosity resins and prolonged curing times. Further, with known thermoplastic resin systems, a hot molten tape layer is applied to a cool solidified thermoplastic structure. Hence, one layer does not fully adhere to the previous layer, sometimes referred as a cold flow front. This interface is weak and will prematurely fail and prevent the composite to act as one continuous composite structure.

What is missing from the art is an in-situ melt process of combining a carbon fiber with a thermoplastic and applying the molten composite to a heated tool surface. Accordingly, one of the objects of the present invention is to create a method that reduces the overall cost of a COPV through the development of a thermoplastic design and a unique manufacturing process. A further object of the present invention is develop a thermoplastic system consisting of a unique rapid filament winding manufacturing process to produce composite structures. Still another object of the present invention is to use a selected fiber with a thermoplastic resin system using an in-situ process (combine both fiber and thermoplastic resin at the filament winding machine delivery head, an automatic tape laying head, or a tow laying system). Such an in-situ process, (combination of a thermoplastic film and carbon fiber at or near the delivery head to allow molten composite be applied to the tool surface), would reduce production time and cost. It will be recognized that reference to a "delivery head" is inclusive of filament winding machines, automatic tape laying systems, tow laying systems, and other systems, presently known or to be developed, for applying a molten thermoplastic composite to a tool.

Document US H 1261 H describes a process according to the preamble of claim 1.

### BRIEF SUMMARY OF THE INVENTION

The present invention is directed towards a method of creating a fiber resin composite overwrap for various workpieces that are known to be amenable to the composite overwrap process. While the present invention has utility in many types of applications that use composite overwrap, a primary usage is in the preparation of Type II, Type III, Type IV and Type V pressure vessels, referred to herein as composite overwrapped pressure vessels, or COPV's. Type III COPV's tend to be modulus driven applications while Type IV COPV's tend to be strength driven applications. Those skilled in the art recognize that strength driven applications call for fibers having different properties than fibers selected for modulus driven applications. The various physical attributes of various fibers are within the scope of the present invention, as defined by the appended claims.

Carbon fiber, or other types of fiber, are combined with a compatible thermoplastic resin system. The selected fiber, whether carbon, glass, aramid, natural fiber, nano-fiber, or other known fibers are prepared for impregnation by a thermoplastic resin. The selected thermoplastic resin, whether in a pellet or tape configuration, is also prepared for processing. The carbon fiber and reduced viscosity, i.e. melted, thermoplastic resin are combined at the filament winding machine delivery head, under pressure, thereby forcing the resin into the fiber bundle. The molten fiber resin composite is then applied to the heated surface of a workpiece, such as a pressure vessel. The surface of the workpiece is heated to the melting point of the thermoplastic resin so that the molten composite more efficiently adheres to the heated surface of the workpiece and so that the layers of composite remain molten resulting in better adherence of the layers to one another. The molten layers are then compacted and consolidated under pressure. This compaction process removes entrapped air and consolidates the various layers of overwrapped fiber resin composite. Use of an in-situ melt process increases composite performance in that catenary, creases, and wrinkles are diminished or eliminated. This is because the individual filaments throughout the thickness of the tow bandwidth are allowed to slide across each other allowing for uniform tension within the fiber bundle of the fiber resin composite.

### BRIEF DESCRIPTION OF THE SEVERAL VIEWS OF THE DRAWINGS

The above-mentioned features of the invention will become more clearly understood from the following detailed description of the invention read together with the drawings in which:

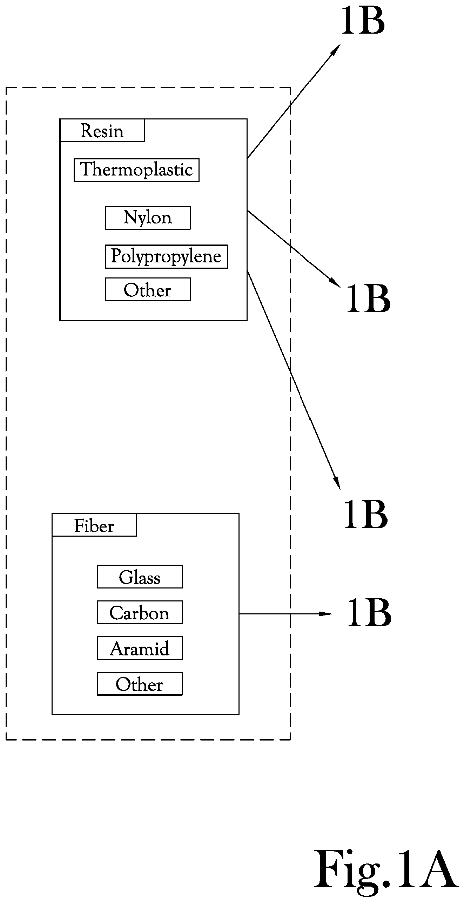

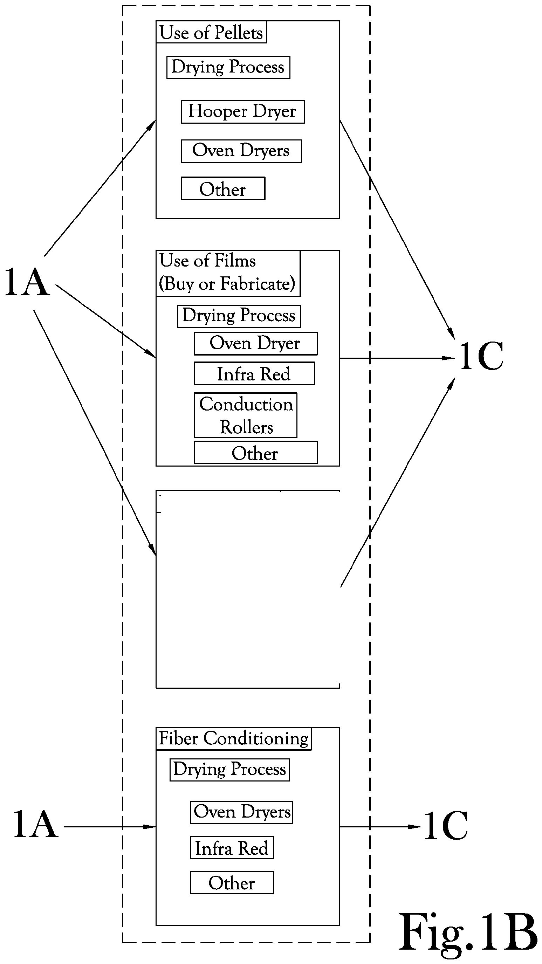

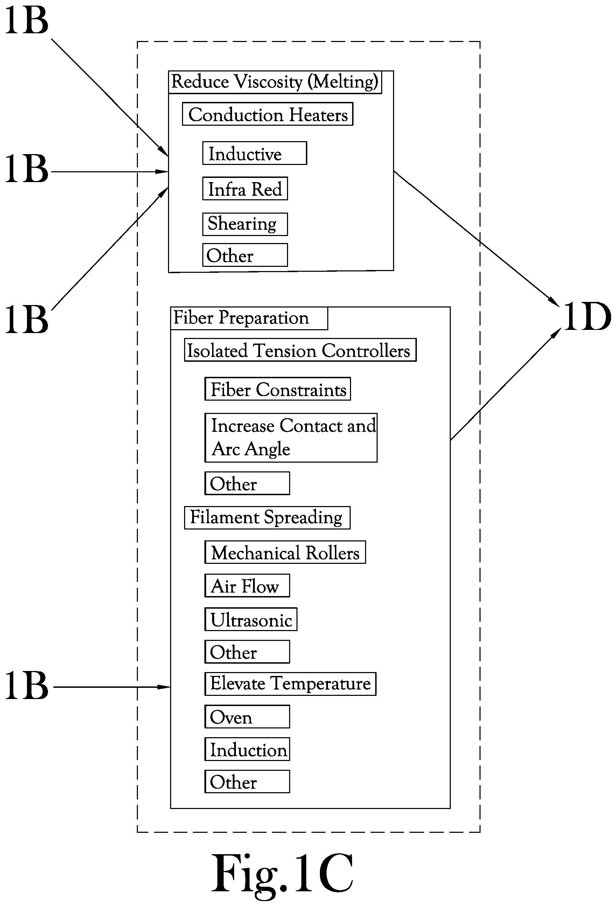

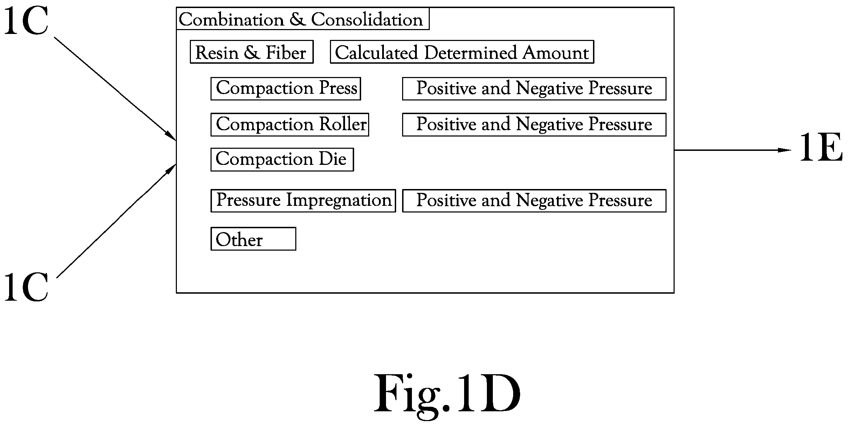

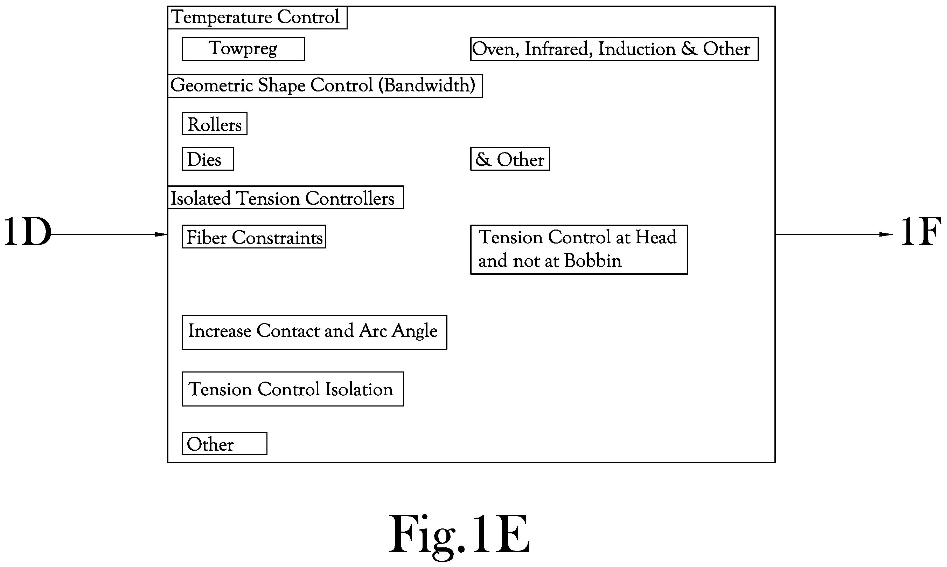

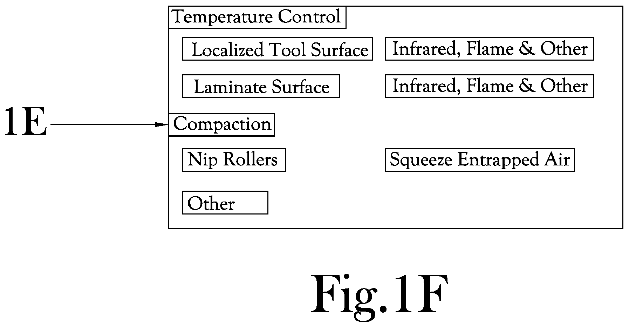

FIGS. 1A - 1F depict a flow-chart of the steps of the present invention.

### DETAILED DESCRIPTION OF THE INVENTION

The present invention is directed towards a method of creating a carbon fiber overwrap according to claim 1, such as is used for pressure vessels. Those skilled in the art will recognize that other types of items, referred to herein generally as workpieces, are often overwrapped with a fiber resin composite. The present invention is further directed towards using an in-situ process for combining both the fiber and thermoplastic resin at the filament winding machine delivery head, the delivery head of an automatic tape laying system, or the delivery head of a tow laying system, and applying the molten fiber thermoplastic resin complex to a heated workpiece, such as, but not limited to a pressure vessel.

### RAW MATERIALS

Those skilled in the art will readily recognize that the primary raw materials in a carbon fiber resin composite include the carbon fiber and the resin. The discussion to follow will address these components in greater detail and their relationship to one another is seen in FIGS 1A - 1F which depict a flow-chart of the steps of the present invention.

### CARBON FIBER

There are a number of commercially available fibers that are used with composite overwrapped applications. In this regard, carbon fibers are typically chosen for Type IV COPV's that are typically used with compressed natural gas, ("CNG"), due to their strength. Type IV COPV's used with CNG are a strength driven application for composite overwrapping due to the fact that the plastic liner does not fatigue. Other applications may call for use of glass fiber, natural fiber, nano-fiber, or aramid fibers. And, those skilled in the art will recognize that there are other known types of fibers that are compatible with thermoplastic resin systems. Type III COPV's used for CNG are modulus driven applications because of the known tendency of aluminum liners to fatigue. Those skilled in the art recognize that strength driven applications call for fibers having different properties than fibers selected for modulus driven applications. The various physical attributes of various fibers are within the scope of the present invention, as defined by the appended claims.

It is known in the art that various commercially available fibers consist of sizing, which is not compatible with thermoplastic resin systems. Those skilled in the art recognize that sizing is a protective film used to protect the individual fiber filament and allow subsequent handling of the fibers; and that sizing promotes the adhesion between the fiber and matrix. Accordingly, in an exemplary embodiment, a fiber having sizing chemistries compatible with thermoplastic resins, such as polypropylene and nylon resins is selected. In an exemplary embodiment, the sizing is applied to the fiber during the carbon fiber manufacturing process, not after. Additionally, due to the known tendency of some fibers and some sizing chemistries to absorb moisture, any latent moisture must be removed by drying. Otherwise the moisture may be expelled during the process of combining the fiber and the resin resulting in porosity within the structure. This porosity results in poor product performance quality. In an exemplary embodiment, the fiber can be dried in oven dryers or infrared dryers. Those skilled in the art will recognize that there are other known methods of drying fiber.

### RESIN

In accordance with the present invention, thermoplastic resins, as opposed to epoxy resins, are preferred. There are many commercially available thermoplastic resins, including nylon resins, polypropylene resins, polyethylene resins, and polyetheretherketone, ("PEEK"), resin systems. Those skilled in the art will recognize that there are other commercially known thermoplastic resin systems that could easily be adapted to the in-situ process of the present invention. For Type IV pressure vessels the use of a low temperature thermoplastic is required due to the plastic liner that is being used. In an exemplary embodiment, polypropylene resin is utilized with plastic liner Type IV pressure vessels. In a further exemplary embodiment, for Type III pressure vessels, a higher temp resin system, such as a nylon resin system is selected.

Just as thermoplastic resins are available in a variety of different chemistries, these resins are available in a variety of physical forms. Thermoplastic resins are available as pellets, films, and threads. While pellets or tapes can be adapted to be used in the present in-situ melt process, it is more economical to utilize a resin in a pellet form. As described above with fiber, it is important that any absorbed moisture be driven off by drying process. In this regard, Hooper dryers, oven dryers, conduction rollers, and infrared dryers can be utilized to dry the thermoplastic resin. Moisture can also be removed, as will be recognized by those skilled in the art, by the use of oven dryer systems.

### MATERIAL PREPARATION

Subsequent to drying the thermoplastic resin, it is necessary to significantly reduce the viscosity of the resin material. The resin's minimum viscosity is reduced under pressure, at a selected temperature over a selected period of time. In this regard, time, temperature, and pressure are inter-dependent variables in the process of reducing the resin to its minimum viscosity. In an exemplary embodiment, shearing arbors are used to to decrease the viscosity of the resin by increasing friction, pressure, and time. Heat is applied by use of conduction heaters, induction heaters, infrared heaters, or other methods of heating a thermoplastic resin in order to reduce its viscosity. It will be understood that the desired temperature is dependent, first, on the resin chemistry selected. Once the viscosity is reduced to a desired level, the melted resin is combined with the fibers, further prepared as will be described below, under pressure in order to assure that the melted resin completely infiltrates the fiber tow.

Prior to being infiltrated by the melted resin, the fiber must be prepared. In order to provide optimum performance, the load-bearing fiber must be uniformly and equally spread to the desired bandwidth. Further, during the spreading process and during the infiltration step, care must be taken to insure that every individual filament within the carbon fiber tow are under the same tension. This critical step also allows easy resin infiltration into and around the individual filaments. In an exemplary embodiment, upstream tension and downstream tension are isolated from one another. Tension up stream of the impregnation area is kept at a minimum, to prevent fiber damage. Pressure is also kept at a minimum during impregnation process to allow easy infiltration of resin. However, after the impregnation process, pressure is increased to improve individual filament alignment and uniformity. Mechanical rollers, combs, air flow, and ultrasonic devices are known devices for spreading the raw fiber tow to the desired bandwidth and maintaining tension on the tow such that all fibers in the tow are under the same tension.

After the individual filaments of the fiber tow are uniformly and precisely spread to the desired bandwidth, the fiber tow must be heated to the same, or in some instances higher, temperature as the molten resin in order to assure adequate and complete impregnation. Those skilled in the art will recognize that the fiber tow can be heated by use of an induction furnace, an oven, or through the use of conduction rollers, or through other methods.

### MATERIAL COMBINATION - RESIN IMPREGNATION OF FIBER

As alluded to above, after the fiber tow is prepared, i.e. dried, spread to the desired bandwidth, and heated, and the resin is at its minimum viscosity, the fiber tow is impregnated with the molten resin, under pressure in an exemplary embodiment. Impregnation under pressure, either positive pressure or negative pressure, can be accomplished by a compaction press, a compaction roller, a compaction die, or by pressure impregnation. In an exemplary embodiment, this step is accomplished immediately prior to application of the molten composite to a heated workpiece such as a pressure vessel. In this regard, in the in-situ process of the present invention, the fiber tow is impregnated with molten resin at, or in very close proximity to the filament winding head.

### MATERIAL APPLICATION - CARBON FIBER IN-SITU PROCESS

Once the fiber and resin are combined, under pressure, to form a towpreg, the towpreg is kept at a constant bandwidth, tension, and temperature. As discussed above, tension is controlled and upstream tension is isolated from downstream tension. Bandwidth and temperature are controlled as discussed above. The location where the towpreg will be laid down is brought to, and kept at a temperature that is approximately the same as the melting point of the thermoplastic resin system in order to allow adhesion of one layer to another. This allows each individual filament to slide one relative to another thereby allowing each individual filament to be at the relative same tension during application of the tow. Further, maintaining a molten state as the layers are laid down allows entrapped air to escape. A heat source, such as induction coils, conduction rollers, flames, infrared heaters, by way of example and not limitation, is utilized to heat the pressure vessel or other tool being overwrapped. An external force is utilized to compact and consolidate the molten towpreg to the pressure vessel, or other tool being overwrapped. This compaction process removes entrapped air and consolidates the various layers of overwrapped fiber resin composite. A compaction roller, or similar device, is utilized for this compaction process.

It will be understood by those skilled in the art, that the entire pressure vessel could be brought up to temperature, or the heating could be isolated, or localized, to the portion of the tool surface undergoing the overwrap process. Further, the temperature is maintained as successive laminations of fiber resin composite are laid down.

In an exemplary embodiment, the carbon fiber, thermoplastic resin are combined at the filament winding machine to produce a thermoplastic composite that is then delivered to a workpiece, such as a pressure vessel while still molten. Those skilled in the art will recognize that other composite manufacturing equipment, such as automatic tape laying systems and other tow laying systems could be utilized with the process of the present invention. To achieve this objective, as stated above, the fiber and resin are heated and combined under pressure in order to impregnate the carbon fiber with molten thermoplastic resin. Then while it is molten, the molten composite matrix is applied to the surface of the tool (pressure vessel liner, shaft or other structure) which has also been heated to the melting point of the thermoplastic resin. In this regard, in an exemplary embodiment, a heating system, such as a flame or heated conduction roller system, is utilized to heat the surface of the tool. Those skilled in the art will recognize that other heat sources could be utilized. Carbon fibers quickly absorb this heat (Induction heat) and will automatically transfer this heat to the thermoplastic resin. The molten towpreg could then be compressed, by means of compaction rollers, dies, or other devices into tape form of the desired bandwidth. This hot composite, i.e. hot towpreg or molten hot tape, is then applied to a hot tool surface. By maintaining the working surface at an elevated temperature that approximates the melting point of the thermoplastic resin, successive layers adhere to one another. Thus, in the in-situ melt process of the present invention, the area of the tool or composite is heated prior to consolidation through the use of another heat source, which can be gas, inductive, infrared, or other known heat sources.

Use of an in-situ melt process also increases composite performance in that catenary, creases, and wrinkles are diminished or eliminated. In this regard, each individual filament within a carbon fiber tow prepreg is allowed to be at equal and uniform tension. This is achieved because the resin systems in the prepreg is allowed to be molten thereby allowing each individual filament within the tow to slide relative to one another, thereby achieving full potential of the fiber tow's mechanical properties. This is because the inner and outer layers of carbon fiber within the tow composite are allowed to slide across each other allowing for uniform tension within the fiber bundle of the fiber resin composite. Further, it will be recognized that the thermoplastic in-situ melt process described herein can be used in any composite manufacturing equipment. That is it can be used within a Fiber placement machine or other equipment such as pultrusion and so on.

While the present invention has been illustrated by description of several embodiments and while the illustrative embodiments have been described in detail, it is not the intention of the applicant to restrict or in any way limit the scope of the appended claims to such detail. Additional modifications will readily appear to those skilled in the art, within the scope of the appended claims.

## Claims

1. An in-situ melt process for creating a fiber resin composite overwrap, said in-situ melt process comprising the steps of:
selecting a fiber tow;
selecting a thermoplastic resin compatible with said selected fiber tow;
preparing said fiber tow for impregnation by said selected thermoplastic resin;
preparing said thermoplastic resin for impregnation into said fiber tow;
impregnating said prepared thermoplastic resin into said prepared fiber tow in close proximity to a filament winding head, thereby creating a molten fiber towpreg;
applying said molten fiber towpreg to a heated surface of a workpiece whereby a molten state of said molten fiber towpreg is maintained during a wrapping procedure thereby resulting in said molten composite more efficiently adhering to the heated surface of the workpiece and resulting in better adherence of successive molten composite layers to one another and further allowing individual filaments to slide relative to one another,
effectively eliminating catenary, wrinkles, and creases within the composite; and
compacting and consolidating said molten fiber towpreg layers to one another under pressure thereby removing entrapped air;
**characterized in that**
said thermoplastic resin is in pellet form or said thermoplastic resin is in tape form and **in that** said fibres have sizing chemistries compatible with the thermoplastic resin and
wherein moisture absorbed by said fibres and said sizing chemistry is removed by drying.

2. The in-situ melt process according to claim 1, wherein drying is performed by oven or infrared dryers.

3. The in-situ melt process for creating a fiber resin composite overwrap of claim 1, wherein the step of preparing said fiber tow for impregnation by said thermoplastic resin includes the steps of drying said fiber tow, spreading said fiber tow to a selected bandwidth, and heating said fiber tow to a selected temperature, wherein said selected temperature is approximately a melting point of said selected thermoplastic resin.

4. The in-situ melt process for creating a fiber resin composite overwrap of claim 1 or 3 wherein said workpiece is a Type II pressure vessel.

5. The in-situ melt process for creating a fiber resin composite overwrap of claim 1 or 3 wherein said workpiece is a Type III pressure vessel.

6. The in-situ melt process for creating a fiber resin composite overwrap of claim 1 or 3 wherein said workpiece is a Type IV pressure vessel.

7. The in-situ melt process for creating a fiber resin composite overwrap of claim 1 or 3 wherein said workpiece is a Type V pressure vessel.

8. The in-situ melt process for creating a fiber resin composite overwrap of claim 1 or 3 wherein said fiber is selected from a group consisting of carbon fiber, glass fiber, natural fiber, nano-fiber, and aramid fiber.

9. The in-situ melt process for creating a fiber resin composite overwrap of claim 1 or 3 wherein said thermoplastic resin is selected from a group consisting of nylon resin, polypropylene resin, polyethylene resin, and polyetheretherketone resin.

## Patentansprüche

1. In-situ-Schmelzverfahren zum Herstellen einer Ummantelung aus Faser-Kunstharz-Verbund, wobei das In-situ-Schmelzverfahren die folgenden Schritte umfasst:
Auswählen eines Faserwergs;
Auswählen eines thermoplastischen Kunstharzes, das mit dem ausgewählten Faserwerg kompatibel ist;
Vorbereiten des Faserwergs für die Imprägnierung mit dem ausgewählten thermoplastischen Kunstharz;
Vorbereiten des thermoplastischen Kunstharzes für die Imprägnierung in das Faserwerg;
Imprägnieren des vorbereiteten thermoplastischen Kunstharzes in das vorbereitete Faserwerg in unmittelbarer Nähe eines Filamentwickelkopfes, wodurch ein schmelzflüssiges Faser-Towpreg geschaffen wird;
Aufbringen des schmelzflüssigen Faser-Towpregs auf eine erhitzte Oberfläche eines Werkstücks, wodurch ein schmelzflüssiger Zustand des schmelzflüssigen Faser-Towpregs während eines Umhüllungsvorgangs aufrechterhalten wird, was dazu führt, dass der schmelzflüssige Verbundwerkstoff effizienter an der erhitzten Oberfläche des Werkstücks haftet und zu einer besseren Haftung aufeinanderfolgender schmelzflüssiger Verbundwerkstoffschichten aneinander führt, und was ferner ermöglicht, dass einzelne Filamente relativ zueinander gleiten können, wodurch Durchhängen, Falten und Knitter innerhalb des Verbundwerkstoffs wirksam eliminiert werden;
und
Verdichten und Verfestigen der schmelzflüssigen Faser-Towpreg-Schichten untereinander unter Druck, wodurch eingeschlossene Luft entfernt wird;
**dadurch gekennzeichnet, dass**
das thermoplastische Kunstharz in Granulatform vorliegt oder das thermoplastische Kunstharz in Bandform vorliegt,
und dadurch, dass die Fasern mit dem thermoplastischen Kunstharz kompatible Schlichtechemien aufweisen,
wobei von den Fasern und der Schlichtechemie absorbierte Feuchtigkeit durch Trocknen entfernt wird.

2. In-situ-Schmelzverfahren nach Anspruch 1, wobei ein Trocknen mittels Ofen oder Infrarottrocknern erfolgt.

3. In-situ-Schmelzverfahren zur Herstellung einer Ummantelung aus Faser-Kunstharz-Verbund nach Anspruch 1, wobei der Schritt Vorbereiten des Faserwergs für eine Imprägnierung mit dem thermoplastischen Kunstharz die Schritte Trocknen des Faserwergs, Ausbreiten des Faserwergs auf eine gewählte Bandbreite und Erhitzen des Faserwergs auf eine gewählte Temperatur umfasst, wobei die gewählte Temperatur ungefähr einem Schmelzpunkt des gewählten thermoplastischen Kunstharzes entspricht.

4. In-situ-Schmelzverfahren zum Herstellen einer Ummantelung aus Faser-Kunstharz-Verbund nach Anspruch 1 oder Anspruch 3, wobei das Werkstück ein Druckbehälter vom Typ II ist.

5. In-situ-Schmelzverfahren zum Herstellen einer Ummantelung aus Faser-Kunstharz-Verbund nach Anspruch 1 oder Anspruch 3, wobei das Werkstück ein Druckbehälter vom Typ III ist.

6. In-situ-Schmelzverfahren zum Herstellen einer Ummantelung aus Faser-Kunstharz-Verbund nach Anspruch 1 oder Anspruch 3, wobei das Werkstück ein Druckbehälter vom Typ IV ist.

7. In-situ-Schmelzverfahren zum Herstellen einer Ummantelung aus Faser-Kunstharz-Verbund nach Anspruch 1 oder Anspruch 3, wobei das Werkstück ein Druckbehälter vom Typ V ist.

8. In-situ-Schmelzverfahren zum Herstellen einer Ummantelung aus Faser-Kunstharz-Verbund nach Anspruch 1 oder Anspruch 3, wobei die Faser aus einer Gruppe ausgewählt wird, die aus Kohlenstofffaser, Glasfaser, Naturfaser, Nanofaser und Aramidfaser besteht.

9. In-situ-Schmelzverfahren zum Herstellen einer Ummantelung aus Faser-Kunstharz-Verbund nach Anspruch 1 oder Anspruch 3, wobei das thermoplastische Kunstharz aus einer Gruppe ausgewählt wird, die aus Nylonharz, Polypropylenharz, Polyethylenharz und Polyetheretherketonharz besteht.

## Revendications

1. Procédé de fusion *in situ* pour créer une surenveloppe composite fibres-résine, ledit procédé de fusion *in situ* comprenant les étapes de :
sélection d'une étoupe de fibres ;
sélection d'une résine thermoplastique compatible avec l'étoupe de fibres sélectionnée ;
préparation de ladite étoupe de fibres pour imprégnation par ladite résine thermoplastique sélectionnée ;
préparation de ladite résine thermoplastique pour imprégnation dans ladite étoupe de fibres ;
imprégnation de ladite résine thermoplastique préparée dans ladite étoupe de fibres préparée à proximité étroite d'une tête d'enroulement de filament, créant ainsi un préimprégné en étoupe de fibres fondu ;
application dudit préimprégné en étoupe de fibres fondu à une surface chauffée d'une pièce à travailler,
moyennant quoi un état fondu dudit préimprégné en étoupe de fibres fondu est maintenu pendant une procédure d'enveloppement, ce qui permet audit composite fondu d'adhérer plus efficacement à la surface chauffée de la pièce à travailler et de mieux faire adhérer des couches successives de composite fondu les unes aux autres et permettant de plus aux filaments individuels de coulisser les uns par rapport aux autres, éliminant ainsi efficacement les caténaires, les rides et les plis au sein du composite ; et
compactage et consolidation desdites couches de préimprégné en étoupe de fibres fondu les unes aux autres sous pression, éliminant ainsi l'air emprisonné ;
**caractérisé en ce que**
ladite résine thermoplastique est sous forme de granulés ou ladite résine thermoplastique est sous forme de bande
et **en ce que** lesdites fibres ont des chimies d'encollage compatibles avec la résine thermoplastique, et
dans lequel l'humidité absorbée par lesdites fibres et ladite chimie d'encollage est éliminée par séchage.

2. Procédé de fusion *in situ* selon la revendication 1, dans lequel un séchage est effectué par des sécheurs à four ou infrarouges.

3. Procédé de fusion *in situ* pour créer une surenveloppe composite fibres-résine selon la revendication 1, dans lequel l'étape de préparation de ladite étoupe de fibres pour imprégnation par ladite résine thermoplastique inclut les étapes de séchage de ladite étoupe de fibres, d'étalement de ladite étoupe de fibres sur une largeur de bande sélectionnée, et de chauffage de ladite étoupe de fibres à une température sélectionnée, dans lequel ladite température sélectionnée est approximativement un point de fusion de ladite résine thermoplastique sélectionnée.

4. Procédé de fusion *in situ* pour créer une surenveloppe composite fibres-résine selon la revendication 1 ou 3, dans lequel ladite pièce à travailler est un récipient à pression de type II.

5. Procédé de fusion *in situ* pour créer une surenveloppe composite fibres-résine selon la revendication 1 ou 3, dans lequel ladite pièce à travailler est un récipient à pression de type III.

6. Procédé de fusion *in situ* pour créer une surenveloppe composite fibres-résine selon la revendication 1 ou 3, dans lequel ladite pièce à travailler est un récipient à pression de type IV.

7. Procédé de fusion *in situ* pour créer une surenveloppe composite fibres-résine selon la revendication 1 ou 3, dans lequel ladite pièce à travailler est un récipient à pression de type V.

8. Procédé de fusion *in situ* pour créer une surenveloppe composite fibres-résine selon la revendication 1 ou 3, dans lequel ladite fibre est sélectionnée dans un groupe consistant en une fibre de carbone, une fibre de verre, une fibre naturelle, une nanofibre et une fibre aramide.

9. Procédé de fusion *in situ* pour créer une surenveloppe composite fibres-résine selon la revendication 1 ou 3, dans lequel ladite résine thermoplastique est sélectionnée dans un groupe consistant en une résine de nylon, une résine de polypropylène, une résine de polyéthylène et une résine de polyétheréthercétone.
